# EUROPEAN PATENT APPLICATION

(11) **EP 4 661 029 A1**
(43) Date of publication of application: **10.12.2025**
(21) Application number: 23924332.2
(22) Date of filing: 09.11.2023
(51) Int. Cl.: G21C 17/12, H01F 7/16, H01F 7/18

(54) **SIMULTANEOUS WINDING-TYPE SOLENOID POSITION INDICATOR AND NUCLEAR POWER PLANT COMPRISING SAME**

(30) Priority: 20.02.2023 KR 20230022406; 07.11.2023 KR 20230153115
(71) Applicant: Korea Atomic Energy Research Institute, Daejeon 34057 (KR)
(72) Inventor: LEE, Jae Seon, Daejeon 34057 (KR); HAN, Soon Woo, Daejeon 34057 (KR)
(74) Representative: BCKIP Part mbB
(86) International application number: PCT/KR2023/018010
(87) International publication number: WO 2024/177226

(57) **Abstract**

A simultaneous wound solenoid position indicator includes: a rod for raising or lowering a control rod such that a degree to which the control rod is inserted into a core is decreased or increased; a magnetic body; and a solenoid module that receives power from an external source and generates a magnetic field toward the magnetic body. An inductance generated by the solenoid module changes due to interaction with a magnetic field of the magnetic body as the control rod is driven up or down. The solenoid module includes a plurality of solenoids, and the plurality of solenoids are wound to surround the rod while being spaced at a predetermined distance radially outward from the rod.

## Description

### TECHNICAL FIELD

The present disclosure relates to a simultaneous wound solenoid position indicator and a nuclear power plant including the same.

### BACKGROUND ART

In a typical nuclear power plant (NPP), the reactor power can be maintained, controlled, or shut down by inserting control rods into the core of the reactor or by adjusting the concentration of the coolant inside the reactor. The control rods contain a neutron absorbing material, and the reactor power can be controlled or shut down depending on the extent to which the control rods are inserted into the core within the reactor vessel. Meanwhile, the degree of insertion of the control rod, which is the extent to which the control rod is inserted into the core, can be adjusted by moving a rod connected to the control rod up and down using a dedicated driving means. As such, measuring the position of the control rod to acquire information about the extent to which the control rod is inserted into the core is very important for controlling or - tripping the output of the reactor.

In a typical large nuclear power plant, a control rod drive mechanism and a position indicator are arranged to be connected to the upper part of the reactor through a nozzle part, so that the control rod drive mechanism and the position indicator do not come into contact with the coolant inside the reactor vessel, and therefore the control rod drive mechanism and the position indicator may not be affected by the high temperature and pressure of the reactor vessel. However, in such a large nuclear power plant, when a component, such as the nozzle part that connects the control rod drive mechanism and the position indicator to the reactor, is damaged, there is a risk of leakage of coolant or the like.

Meanwhile, in the small modular reactor (SMR) which is currently in operation, by connecting the reactor, pressurizer, steam generator, and reactor coolant pump so that they are arranged within a single reactor vessel, the size of the reactor can be reduced compared to existing large reactors and large-break loss-of-coolant accidents can be prevented.

However, in the case of such a small modular reactor, it is required to place the control rod drive mechanism and the position indicator inside the reactor vessel. In conventional small modular reactors, due to the densely packed internal structure of the reactor, it is difficult to place the control rod drive mechanism and the position indicator inside the reactor vessel. In addition, even if the position indicator is placed inside the reactor vessel, there is a problem in that when one or more of the plurality of components responsible for generating information about the position of the control rod from the position indicator are damaged, the position indicator may fail to accurately measure the degree of insertion of the control rod into the core.

### DETAILED DESCRIPTION OF INVENTION

### TECHNICAL PROBLEMS

One embodiment of the present disclosure has been devised in view of the aforementioned background, and provides a nuclear power plant including a position indicator capable of, even if one or more of a plurality of solenoids are damaged, obtaining inductance values from the remaining solenoids that are operating normally and deriving the degree of insertion of a control rod into a core based on the obtained inductance values.

The present disclosure provides a compact nuclear power plant by placing a portion of the position indicator within a reactor vessel.

### TECHNICAL SOLUTION

In accordance with one embodiment of the present disclosure, a simultaneous wound solenoid position indicator comprises: a rod for raising or lowering a control rod such that a degree to which the control rod is inserted into a core is decreased or increased; a magnetic body; and a solenoid module that receives power from an external source and generates a magnetic field toward the magnetic body, wherein an inductance generated by the solenoid module changes due to interaction with a magnetic field of the magnetic body as the control rod is driven up or down, wherein the solenoid module includes a plurality of solenoids, and the plurality of solenoids are wound to surround the rod while being spaced at a predetermined distance radially outward from the rod.

Further, the solenoid module may be arranged within a reactor vessel with its position and posture fixed, and the magnetic body may be withdrawn from the solenoid module or at least a portion of the magnetic body may be inserted into the solenoid module as the rod is driven up or down.

Further, the magnetic body may be placed in one of the following states: a first withdrawn state in which the rod is driven up and the magnetic body is withdrawn upward from the solenoid module; a first intermediate state in which the rod is driven down and at least a portion of the magnetic body is positioned within the solenoid module; and a first inserted state in which the rod is further driven down from the first intermediate state of the magnetic body and the entire magnetic body is positioned within the solenoid module.

Further, the plurality of solenoids may be configured to generate inductances of different values when the magnetic body is placed in either the first intermediate state or the first inserted state.

Further, the plurality of solenoids may be configured such that the number of windings wound around the rod is adjusted to generate an inductance of the same value when the magnetic body is placed in either the first intermediate state or the first inserted state.

Further, the magnetic body may be placed in one of the following states: a second inserted state in which the entire magnetic body is positioned within the solenoid module; a second intermediate state in which the rod is further driven down from the second inserted state of the magnetic body, so that at least a portion of the magnetic body is withdrawn downward from the solenoid module; and a second withdrawn state in which the rod is further driven down from the second intermediate state of the magnetic body, so that the entire magnetic body is withdrawn downward from the solenoid module.

Further, the plurality of solenoids may be configured to generate inductances of different values when the magnetic body is placed in either the second intermediate state or the second withdrawn state.

Further, the plurality of solenoids may be configured such that the number of windings around the rod is adjusted to generate an inductance of the same value when the magnetic body is placed in either the second intermediate state or the second withdrawn state.

Further, the solenoid module may further include one or more solenoid parts, each of the solenoid parts includes a first solenoid, a second solenoid, a third solenoid, and a fourth solenoid, and the first solenoid, the second solenoid, the third solenoid, and the fourth solenoid are wound in contact with each other along a direction in which the rod extends while being spaced at a predetermined distance radially outward from the rod.

Further, the solenoid module may further include one or more solenoid parts, the solenoid parts include a first solenoid, a second solenoid, a third solenoid, and a fourth solenoid, the first solenoid and the second solenoid are wound in contact with each other along a direction in which the rod extends while being spaced at a predetermined distance radially outward from the rod, and the third solenoid and the fourth solenoid are wound in contact with each other along the direction in which the rod extends on a radially outer side of the first solenoid and the second solenoid.

Further, the solenoid module may further include: a first solenoid part including a plurality of solenoids; and a second solenoid part stacked on the first solenoid part to surround an outer side of the first solenoid part, wherein the first solenoid part may include a first solenoid, a second solenoid, a third solenoid, and a fourth solenoid, and wherein the second solenoid part may include a solenoid identical to one or more of the first solenoid, the second solenoid, the third solenoid, and the fourth solenoid.

Further, the position indicator may further comprise a controller for deriving an degree of insertion, defined as the degree to which the control rod is inserted into the core, based on changes in the inductance of the solenoid module, wherein the controller may independently obtain inductance values generated from one or more of the plurality of solenoids, and may derive the degree of insertion of the control rod based on each of the obtained inductance values.

Further, the position indicator may further comprise a power supply unit that supplies power to the plurality of solenoids, wherein the power supply unit may supply current of the same magnitude and phase to the plurality of solenoids, or supplies current of different magnitude and phase to the plurality of solenoids.

Further, the position indicator may further comprise a driving mechanism that drives up or down the rod to decrease or increase the degree to which the control rod is inserted into the core, wherein the driving mechanism may be disposed within the reactor vessel.

Further, each of the plurality of solenoids may include: a copper wire; a cover part covering the copper wire; and a sheath wrapping the cover part, and wherein the cover part may be made of stainless steel.

Further, a nuclear power plant may comprise: a nuclear reactor including a core, a reactor vessel accommodating the core, and a control rod for suppressing a nuclear reaction in the core; and a position indicator for measuring a position of the control rod when the control rod is inserted into the core, wherein the position indicator may include: a rod for raising or lowering the control rod such that a degree to which the control rod is inserted into the core is decreased or increased; a magnetic body surrounding at least a portion of the rod and generating a magnetic field; and a solenoid module that receives power from an external source and generates a magnetic field toward the magnetic body, wherein an inductance generated by the solenoid module changes due to interaction with the magnetic field of the magnetic body as the control rod is driven up or down, wherein the solenoid module may include a plurality of solenoids, and wherein the plurality of solenoids may be wound to surround the rod while being spaced at a predetermined distance radially outward from the rod.

Further, the magnetic body may be placed in one of the following states: a first withdrawn state in which the rod is driven up and the magnetic body is withdrawn upward from the solenoid module; a first intermediate state in which the rod is driven down and at least a portion of the magnetic body is positioned within the solenoid module; and a first inserted state in which the rod is driven down further from the first intermediate state of the magnetic body and the entire magnetic body is positioned within the solenoid module; wherein the control rod may be positioned such that a portion thereof overlaps the core when viewed in a horizontal direction when the magnetic body is placed in the first withdrawn state, wherein the control rod may be partially inserted into the core when the magnetic body is placed in the first intermediate state, and wherein the control rod may be entirely inserted into the core when the magnetic body is placed in the first inserted state.

Further, the magnetic body may be placed in one of the following states: a second inserted state in which the entire magnetic body is positioned within the solenoid module; a second intermediate state in which the rod is driven down further from the second inserted state of the magnetic body, so that at least a portion of the magnetic body is withdrawn downward from the solenoid module; and a second withdrawn state in which the rod is driven down further from the second intermediate state of the magnetic body, so that the entire magnetic body is withdrawn downward from the solenoid module, wherein the control rod may be positioned such that a portion of the magnetic body overlaps the core when viewed in a horizontal direction when the magnetic body is placed in the second inserted state, wherein the control rod may be partially inserted into the core when the magnetic body is placed in the second intermediate state, and wherein the control rod may be entirely inserted into the core when the magnetic body is placed in the second withdrawn state.

### EFFECT OF INVENTION

According to one embodiment of the present disclosure, the plurality of solenoids independently generate their respective inductance values, so that even if one or more of the plurality of solenoids are damaged, the remaining solenoids that are operating normally can generate independent inductance values.

Further, the controller independently obtains the inductance values from one or more of the plurality of solenoids, so that even if one or more of the plurality of solenoids are damaged, the controller can obtain the inductance values from the remaining solenoids that are operating normally and derive the degree of insertion of the control rod into the core based on the obtained inductance values.

Furthermore, in the plurality of solenoids, the number of windings per unit length can be adjusted to generate different inductance values or the same inductance value.

In addition, the plurality of solenoids can have durability that allows them to operate even in high-temperature and high-pressure environment inside the reactor vessel.

Moreover, since the solenoid module is arranged within the reactor vessel with its position and posture fixed, the nuclear power plant can be made more compact.

### BRIEF DESCRIPTION OF THE DRAWINGS

FIG. 1 is a cross-sectional view of a position indicator and a reactor in a nuclear power plant according to one embodiment of the present disclosure.
FIG. 2 is a diagram showing a state in which a portion of a control rod overlaps a core when a magnetic body of the position indicator of FIG. 1 is placed in a first withdrawn state.
FIG. 3 is a diagram showing a state in which the control rod is partially inserted in the core when the magnetic body of the position indicator of FIG. 1 is placed in a first intermediate state.
FIG. 4 is a diagram showing a state in which the control rod is entirely inserted in the core when the magnetic body of the position indicator of FIG. 1 is placed in a first inserted state.
FIG. 5 is a diagram showing a state in which a portion of the control rod overlaps the core when the magnetic body of the position indicator of FIG. 1 is placed in a second inserted state.
FIG. 6 is a diagram showing a state in which the control rod is partially inserted in the core when the magnetic body of the position indicator of FIG. 1 is placed in a second intermediate state.
FIG. 7 is a drawing showing that the control rod is entirely inserted into the core when the magnetic body of the position indicator of FIG. 1 is placed in the second withdrawn state.
FIG. 8 is a partial enlarged view of a first solenoid part of a solenoid module of the position indicator of FIG. 1.
FIG. 9 is a cross-sectional view of the first solenoid part of the solenoid module of FIG. 8.
FIG. 10 is a cross-sectional view showing some solenoids of the first solenoid part of the solenoid module stacked and arranged.
FIG. 11 is a diagram showing a second solenoid part stacked on the first solenoid part of the solenoid module.
FIG. 12 is a diagram showing changes in inductance values with respect to the rod positions for a first solenoid and a second solenoid in the first solenoid part.

### MODE FOR CARRYING OUT THE INVENTION

Hereinafter, specific embodiments for implementing the technical idea of the present disclosure will be described in detail with reference to the drawings.

In addition, in describing the present disclosure, when it is determined that detailed descriptions of known configurations or functions may obscure the gist of the present disclosure, the detailed descriptions will be omitted.

Moreover, it should be understood that when a component is referred to as being 'connected to', 'supplied to', 'transmitted from', or 'contacted with' another component, it may be directly connected to, supplied to, transmitted from, or contacted with another component, but other components may exist between the components.

The terms used in the present specification are only used for describing the specific embodiments and are not intended to limit the present disclosure. Singular expressions include plural expressions unless the context clearly indicates otherwise.

In addition, in the present specification, expressions such as upper, lower, side, etc. are described based on the drawings, and it is made clear in advance that they may be expressed differently if the direction of the object is changed. For the same reason, some components in the accompanying drawings are exaggerated, omitted, or schematically illustrated, and the size of each component does not entirely reflect the actual size.

Further, terms including ordinal numbers, such as first, second, etc., may be used to describe various components, but the components are not limited by these terms. These terms are only used to distinguish one component from another.

The meaning of "including" used in the present specification specifies specific features, regions, integers, steps, operations, elements and/or components, and does not exclude the presence or addition of other specific features, regions, integers, steps, operations, elements, components, and/or groups.

Hereinafter, a specific configuration of a nuclear power plant 1 according to one embodiment of the present disclosure will be described with reference to the drawings.

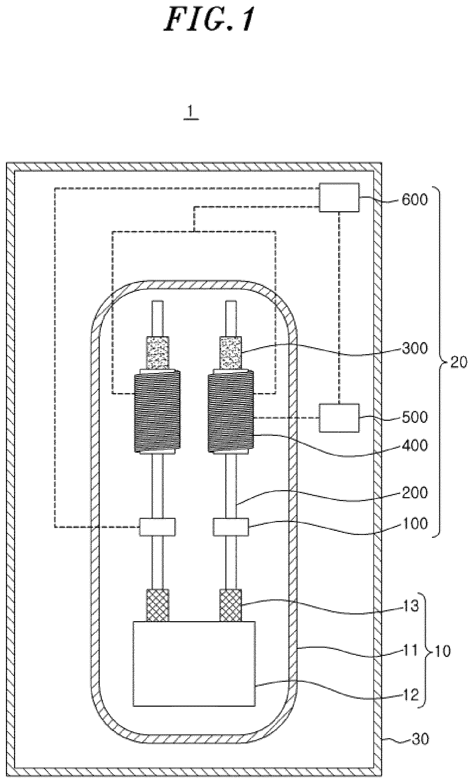

Referring to FIG. 1, in the present embodiment, the nuclear power plant 1 is capable of measuring the position of a control rod 13 inserted into a core 12 in a reactor vessel 11. The nuclear power plant 1 may include a nuclear reactor 10, a position indicator 20, and a containment unit 30.

The nuclear reactor 10 can convert thermal energy generated by a nuclear reaction in the core 12 within the reactor vessel 11 into electrical power. The nuclear reactor 10 may include the reactor vessel 11, the core 12, and the control rod 13.

The reactor vessel 11 may accommodate the core 12 and the position indicator 20 inside. Cooling water may flow within the reactor vessel 11 to cool the heat generated by the nuclear reaction in the core 12. The reactor vessel 11 may be formed as a sealed structure, and the reactor vessel 11 may be disposed inside the containment unit 30.

The core 12 can cause a nuclear reaction. The control rod 13 can be moved in the core 12, and the degree to which the control rod 13 is inserted into the core 12 can be reduced or increased according to the movement of the control rod 13. For example, when the control rod 13 is partially inserted into the core 12, the nuclear reaction in the core 12 can be relatively less restricted, and when the control rod 13 is entirely inserted into the core 12, the nuclear reaction in the core 12 can be relatively more restricted.

The control rod 13 can suppress the nuclear reaction in the core 12 when inserted into the core 12 within the reactor vessel 11. The control rod 13 is connected to a rod 200, and as the rod 200 is raised or lowered in an up-down direction, the control rod 13 can be partially or entirely inserted into the core 12.

The control rod 13 may be positioned such that a portion thereof overlaps the core 12 when viewed in a horizontal direction. For example, when a magnetic body 300 is placed in a first withdrawn state or a second inserted state, which will be described later, a lower end portion of the control rod 13 may be positioned to overlap an upper end portion of the core 12.

When the rod 200 is driven down and the control rod 13 is partially inserted into the core 12, the nuclear reaction in the core 12 can be relatively less restricted. For example, when the rod 200 is driven down and the magnetic body 300 is placed in a first intermediate state or a second intermediate state, which will be described later, the control rod 13 may be partially inserted into the core 12.

In addition, when the rod 200 is further driven down and the control rod 13 is entirely inserted into the core 12, the nuclear reaction in the core 12 can be relatively more restricted. For example, when the rod 200 is further driven down and the magnetic body 300 is placed in a first inserted state or a second withdrawn state, which will be described later, the control rod 13 can be entirely inserted into the core 12. Meanwhile, the degree of insertion may be defined as the degree to which the control rod 13 is inserted into the core 12 when the rod 200 is driven down and the control rod 13 is partially or entirely inserted into the core 12.

The position indicator 20 can measure the position of the control rod 13 when the control rod 13 is inserted into the core 12. For example, the position indicator 20 can derive the degree of insertion, which is the degree to which the control rod 13 is inserted into the core 12, based on a change in the inductance value of a solenoid module 400. The position indicator 20 may include a driving mechanism 100, a rod 200, a magnetic body 300, a solenoid module 400, a power supply unit 500, and a controller 600.

The driving mechanism 100 can drive up or down the rod 200 so that the degree to which the control rod 13 is inserted into the core 12 decreases or increases. For example, when the magnetic body 300 is in the first withdrawn state or the second inserted state, the driving mechanism 100 can drive down the rod 200 such that the control rod 13 is partially inserted into the core 12. In addition, the driving mechanism 100 can further drive down the rod 200 such that the control rod 13 is entirely inserted into the core 12. The driving mechanism 100 may be arranged to surround the rod 200 within the reactor vessel 11. Meanwhile, although the driving mechanism 100 is shown surrounding the rod 200 at a position below the solenoid module 400 in the drawings, the driving mechanism 100 may surround the rod 200 at a position above the solenoid module 400. The operation of the driving mechanism 100 can be controlled by the controller 600 to drive up or down the rod.

The rod 200 can be driven up or down by the driving mechanism 100 to decrease or increase the degree to which the control rod 13 is inserted into the core 12. The rod 200 may extend in one direction (the up-down direction in FIG. 1). In addition, a portion of the rod 200 can be configured to be surrounded by the magnetic body 300.

The magnetic body 300 can be magnetized in a magnetic field. The magnetic body 300 may be configured to surround at least a portion of the rod 200. Alternatively, the magnetic body 300 may constitute the rod 200 itself. In addition, the magnetic body 300 may be attached to the rod 200. As the rod 200 is driven up or down, the magnetic body 300 can be withdrawn from the solenoid module 400, or at least a portion of the magnetic body 300 can be inserted into the solenoid module 400. Due to interaction with the magnetic field generated as the magnetic body 300 is withdrawn from the solenoid module 400 or at least a portion of the magnetic body 300 is inserted into the solenoid module 400, the inductance of the solenoid module 400 may change. A detailed explanation of this will be described later.

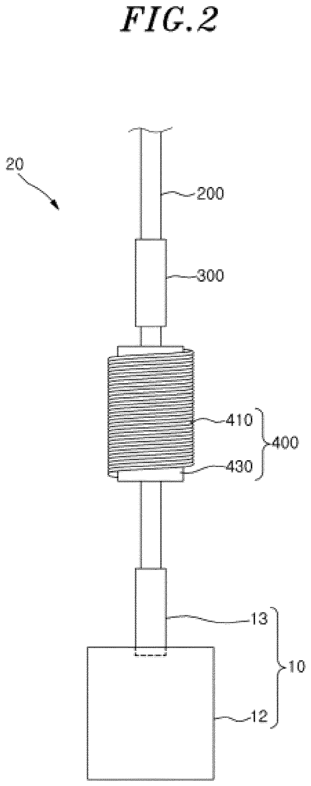

Referring to FIGS. 2 to 4, the magnetic body 300 can be placed in any one of the first withdrawn state, the first intermediate state, and the first inserted state as the rod 200 is driven up or down.

The first withdrawn state may refer to a state in which the rod 200 is driven up and the magnetic body 300 is withdrawn upward from the solenoid module 400. In the first withdrawn state, a portion of the control rod 13 may be positioned to overlap the core 12 when viewed in a horizontal direction (FIG. 2).

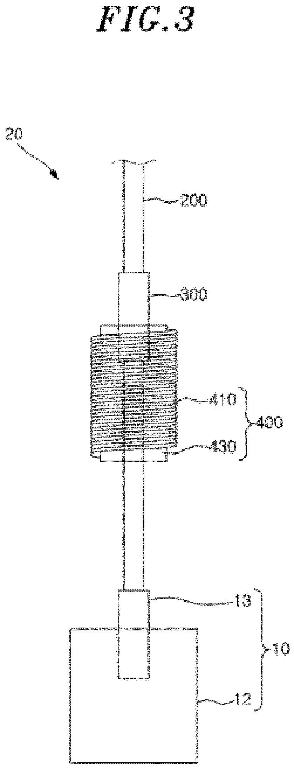

The first intermediate state may refer to a state in which the rod 200 is driven down further from the first withdrawn state of the magnetic body 300, and a portion of the magnetic body 300 is positioned within the solenoid module 400. In the first intermediate state, the control rod 13 may be partially inserted into the core 12, and the nuclear reaction in the core 12 may be relatively less restricted (FIG. 3).

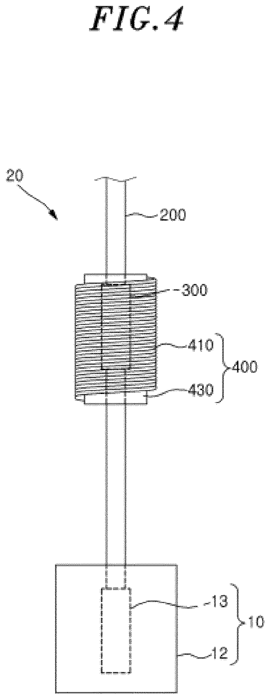

The first inserted state may refer to a state in which the rod 200 is further driven down from the first intermediate state of the magnetic body 300, so that the entire magnetic body 300 is positioned within the solenoid module 400. In the first inserted state, the control rod 13 may be entirely inserted into the core 12, and the nuclear reaction in the core 12 may be relatively more restricted (FIG. 4).

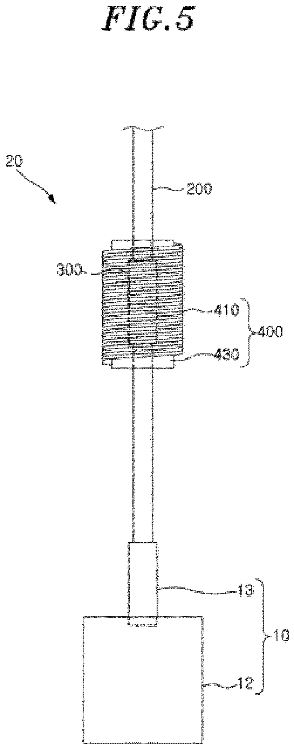

Referring to FIGS. 5 to 7, in another embodiment, as the rod 200 is driven up or down, the magnetic body 300 may be placed in any one of the second inserted state, the second intermediate state, and the second withdrawn state.

The second inserted state may refer to a state in which the entire magnetic body 300 is positioned within the solenoid module 400. In the second inserted state, a portion of the control rod 13 may be positioned to overlap the core 12 when viewed in a horizontal direction (FIG. 5).

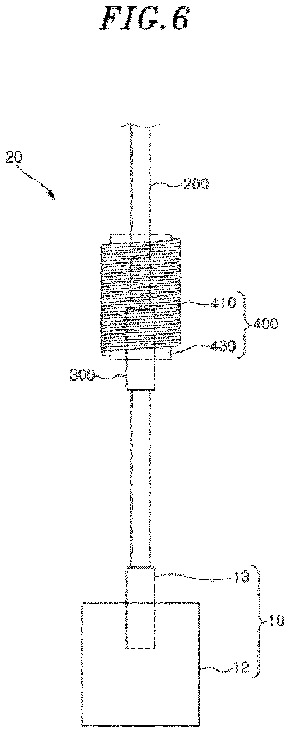

The second intermediate state may refer to a state in which the rod 200 is driven down further from the second inserted state of the magnetic body 300, and at least a portion of the magnetic body 300 is withdrawn downward from the solenoid module 400. In the second intermediate state, the control rod 13 may be partially inserted into the core 12, and the nuclear reaction of the core 12 may be relatively less restricted (FIG. 6).

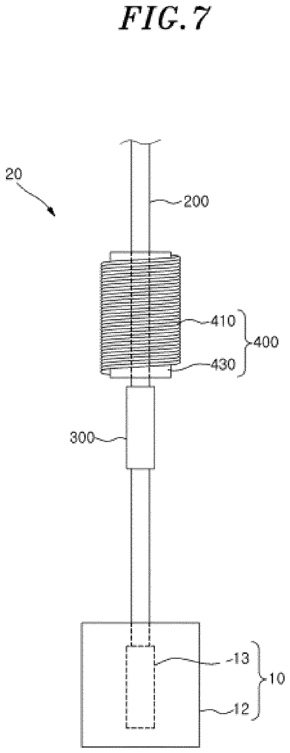

The second withdrawn state may refer to a state in which the rod 200 is driven down further from the second intermediate state of the magnetic body 300, and the entire magnetic body 300 is withdrawn downward from the solenoid module 400. In the second withdrawn state, the control rod 13 may be entirely inserted into the core 12, and the nuclear reaction in the core 12 may be relatively more restricted (FIG. 7).

The solenoid module 400 can interact with the magnetic field transmitted from the magnetic body 300 as the control rod 13 is moved to be partially or entirely inserted into the core 12, and the inductance of the solenoid module 400 may change due to the interaction with the magnetic field. For example, the solenoid module 400 may be arranged in the reactor vessel 11 with its position and posture fixed. In addition, the solenoid module 400 can receive power from the power supply unit 500 and generate a magnetic field toward the magnetic body 300 while its position and posture remain fixed.

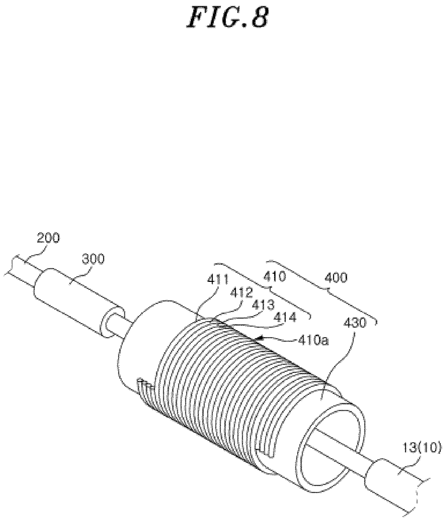

Referring to FIGS. 8 to 10, the solenoid module 400 can interact with the changing magnetic field of the magnetic body 300 as the magnetic body 300 moves upward or downward within the solenoid module 400 so that the magnetic body 300 is raised or lowered to be in one of the first intermediate state and the first inserted state or one of the second intermediate state and the second withdrawn state, and the value of the inductance generated by this interaction with the magnetic field may vary. In this case, the controller 600 can derive the degree of insertion, which is the degree to which the control rod 13 is inserted into the core 12, based on the change in the inductance value of the solenoid module 400. Meanwhile, the solenoid module 400 may be accommodated in a separate case in which an accommodation space is formed. The solenoid module 400 may include a first solenoid part 410, a second solenoid part 420, and a bobbin 430.

The first solenoid part 410 may include a plurality of solenoids wound in contact with each other along the direction in which the rod 200 extends, spaced at a predetermined distance radially outward from the rod 200. The first solenoid part 410 may be wound to contact an outer peripheral surface of the bobbin 430. The first solenoid part 410 may include a first solenoid 411, a second solenoid 412, a third solenoid 413, and a fourth solenoid 414.

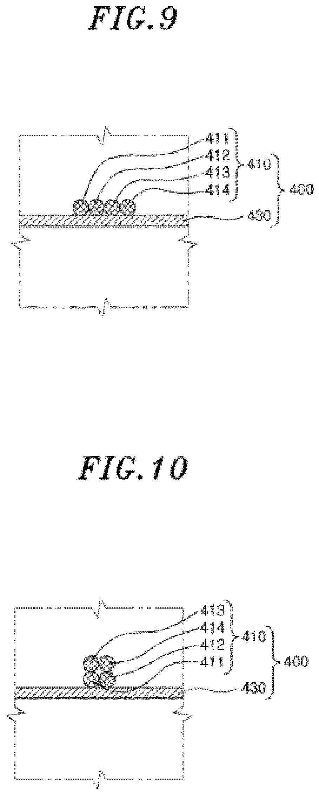

The first solenoid 411, the second solenoid 412, the third solenoid 413, and the fourth solenoid 414 may be wound on the outer peripheral surface of the bobbin 430 to be in contact with each other along the direction in which the rod 200 extends while being spaced at the predetermined distance radially outward from the rod 200 (FIGS. 8 and 9). For example, the first solenoid 411, the second solenoid 412, the third solenoid 413, and the fourth solenoid 414 may be wound on the outer peripheral surface of the bobbin 430 in a form in which the four solenoids are wound simultaneously to be in contact with each other along the direction in which the rod 200 extends.

As another example, the first solenoid 411 and the second solenoid 412 may be wound in contact each other along the direction in which the rod 200 extends while being spaced at the predetermined distance radially outward from the rod 200, and the third solenoid 413 and the fourth solenoid 414 may be wound on the radially outer side of the first solenoid 411 and the second solenoid 412 to be in contact with each other along the direction in which the rod 200 extends (FIG. 10). For example, the first solenoid 411 and the second solenoid 412 may be wound on the outer peripheral surface of the bobbin 430 to be in contact with each other, and the third solenoid 413 and the fourth solenoid 414 may be wound to be stacked on the outer side (upper side in FIG. 10) of the first solenoid 411 and the second solenoid 412. In this way, four solenoids can be wound simultaneously in a form in which two solenoids, the third solenoid 413 and the fourth solenoid 414, are stacked on the outer side of two solenoids, the first solenoid 411 and the second solenoid 412.

The first solenoid 411, the second solenoid 412, the third solenoid 413, and the fourth solenoid 414 may be configured to generate inductances of different values when the magnetic body 300 is in either the first intermediate state or the first inserted state. For example, the first solenoid 411, the second solenoid 412, the third solenoid 413, and the fourth solenoid 414 may be configured to generate inductances of different values when where the rod 200 is driven down and the magnetic body 300 is in the first intermediate state where a portion of the magnetic body 300 is positioned within the solenoid module 400 or the first inserted state where the entire magnetic body 300 is positioned within the solenoid module 400.

In addition, the first solenoid 411, the second solenoid 412, the third solenoid 413, and the fourth solenoid 414 may be configured to generate inductances of different values when the magnetic body 300 is in either the second intermediate state or the second withdrawn state. For example, the first solenoid 411, the second solenoid 412, the third solenoid 413, and the fourth solenoid 414 may be configured to generate inductances of different values when the rod 200 is driven down and the magnetic body 300 is in the second intermediate state where a portion of the magnetic body 300 is withdrawn downward from the solenoid module 400 or the second withdrawn state where the entire magnetic body 300 is withdrawn downward from the solenoid module 400.

The first solenoid 411, the second solenoid 412, the third solenoid 413, and the fourth solenoid 414 may be configured such that the number of windings per unit length for each solenoid on the bobbin 430 can be adjusted to allow them to generate inductances of the same value when the magnetic body 300 is raised or lowered and placed in either the first intermediate state or the first inserted state, or in either the second intermediate state or the second withdrawn state. For example, by adjusting the number of windings of the first solenoid 411, the second solenoid 412, the third solenoid 413, and the fourth solenoid 414 according to the following equation, the first solenoid 411, the second solenoid 412, the third solenoid 413, and the fourth solenoid 414 can generate inductances of the same value.

For example, when the numbers of windings per unit length for the first solenoid 411 and the second solenoid 412 wound on the bobbin 430 are respectively denoted as N₁ and N₂, the cross-sectional areas of the first solenoid 411 and the second solenoid 412 are respectively denoted as A₁ and A₂, and the inductance values of the first solenoid 411 and the second solenoid 412 are respectively denoted as L₁ and L₂, since A₁ × N₁² = A₂ × N₂² and N₂ = √ (A₁/ A₂) × N₁, by adjusting the number of windings N₂ of the second solenoid 412, the inductance values L₁ and L₂ of the first solenoid 411 and the second solenoid 412 can be set to be the same. Meanwhile, if the inductance values of the first solenoid 411 and the second solenoid 412 are not set to the same value despite adjusting the number of windings of the first solenoid 411 and the second solenoid 412, the inductance values of the first solenoid 411 and the second solenoid 412 to be set may be determined in advance, and when measuring the inductances generated by the first solenoid 411 and the second solenoid 412, the inductances generated by the first solenoid 411 and the second solenoid 412 may be corrected to have the same value.

Since the first solenoid 411, the second solenoid 412, the third solenoid 413, and the fourth solenoid 414 independently generate their own inductance values, even if one or more of the first solenoid 411, the second solenoid 412, the third solenoid 413, and the fourth solenoid 414 are damaged, the remaining solenoids that are operating normally can generate independent inductance values.

A first winding part 410a may refer to a single unit set including the first solenoid 411, the second solenoid 412, the third solenoid 413, and the fourth solenoid 414 among a plurality of solenoids. For example, the first winding part 410a may be a single unit set in which the first solenoid 411, the second solenoid 412, the third solenoid 413, and the fourth solenoid 414 are arranged in contact with one another. Meanwhile, the first winding part 410a comprised of a set unit of the first solenoid 411, the second solenoid 412, the third solenoid 413, and the fourth solenoid 414 is only an example, and the first winding part 410a may be comprised of a set unit of only the first solenoid 411 and the second solenoid 412, and may also be comprised of a set unit including additional solenoids beyond the fourth solenoid 414.

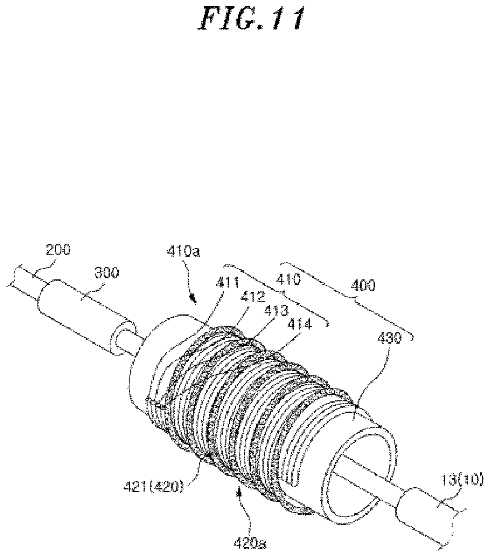

Referring to FIG. 11, the second solenoid part 420 may be wound on the outer side of the first solenoid part 410 to be stacked on the first solenoid part 410. The second solenoid part 420 may include one or more fifth solenoids 421.

The fifth solenoid 421 may be an additional solenoid wound to adjust an output signal of the inductance value (for example, to increase the inductance value) of any one of the first solenoid 411, the second solenoid 412, the third solenoid 413, and the fourth solenoid 414 of the first solenoid part 410. By additionally winding the fifth solenoid 421, an extra magnetic field can be applied to the first solenoid 411, the second solenoid 412, the third solenoid 413, and the fourth solenoid 414 of the first solenoid part 410. The fifth solenoid 421 may be identical to one or more of the first solenoid 411, the second solenoid 412, the third solenoid 413, and the fourth solenoid 414 of the first solenoid part 410.

Meanwhile, the number of windings per unit length of the fifth solenoid 421 wound on the bobbin 430 can be adjusted so that the fifth solenoid 421 generates inductance value equal to that of the first solenoid 411, the second solenoid 412, the third solenoid 413, and the fourth solenoid 414 of the first solenoid part 410.

A second winding part 420a may refer to a single unit including solenoids other than the solenoids of the first winding part 410a. For example, the second winding part 420a may refer to a single unit for the fifth solenoid 421 of the second solenoid part 420. As another example, when the second solenoid part 420 includes a sixth solenoid (not shown) in addition to the fifth solenoid 421, the second winding part 420a may refer to a single unit set in which the fifth solenoid 421 and the sixth solenoid are arranged in contact with each other. Meanwhile, the fifth solenoid 421 of the second winding part 420a, or the fifth solenoid 421 and the sixth solenoid of the second winding part 420a are only examples, and the second winding part 420a may include additional solenoids beyond the sixth solenoid.

The plurality of solenoids in the first solenoid part 410 and the second solenoid part 420 may receive power from the power supply unit 500. In addition, each of the plurality of solenoids may include a copper wire, a stainless steel cover part covering the copper wire, and a sheath wrapping the cover part. Accordingly, the plurality of solenoids may have durability sufficient to operate even in the high-temperature and high-pressure environment inside the reactor vessel 11.

The bobbin 430 can allow the plurality of solenoids to surround the rod 200. For example, the first solenoid 411, the second solenoid 412, the third solenoid 413, and the fourth solenoid 414 of the first solenoid part 410 may be wound on the outer peripheral surface of the bobbin 430, and the first solenoid part 410 can be maintained in a circular wound shape by the bobbin 430. The bobbin 430 may be formed in a cylindrical shape and may extend along the direction in which the rod 200 extends.

The power supply unit 500 can apply power to the plurality of solenoids in the first solenoid part 410 and one or more solenoids in the second solenoid part 420. The power supply unit 500 can apply current of the same magnitude and phase to the plurality of solenoids in the first solenoid part 410 and the second solenoid part 420. In addition, the power supply unit 500 can apply current of different magnitudes and phases to the plurality of solenoids in the first solenoid part 410 and the second solenoid part 420. Meanwhile, the power supply unit 500 can be controlled by the controller 600 to apply current of the same or different magnitude and phase to the first solenoid part 410 and the second solenoid part 420. The power supply unit 500 may be disposed adjacent to the reactor vessel 11 within the containment unit 30.

The controller 600 can derive a degree of insertion, which is the degree to which the control rod 13 is inserted into the core 12, based on changes in the inductance of the solenoid module 400. For example, when the magnetic body 300 is lowered and placed in the first intermediate state or the second intermediate state, the controller 600 can derive a first degree of insertion, which indicates that the control rod 13 is partially inserted into the core 12. Further, when the magnetic body 300 is lowered further from the first intermediate state or the second intermediate state and placed in the first inserted state or the second withdrawn state, the controller 600 can derive a second degree of insertion, indicating that the control rod 13 is entirely inserted into the core 12.

In addition, the controller 600 can independently obtain the values of inductance generated by one or more of the plurality of solenoids, and derive the degree of insertion of the control rod 13 based on each of the obtained inductance values. For example, the controller 600 can independently obtain the values of inductance generated by one or more of the first solenoid 411, the second solenoid 412, the third solenoid 413, and the fourth solenoid 414 in the first solenoid part 410. Further, the controller 600 can derive the degree of insertion of the control rod 13 based on each of the inductance values obtained from one or more of the first solenoid 411, the second solenoid 412, the third solenoid 413, and the fourth solenoid 414. In this way, since the controller 600 independently obtains the inductance values from one or more of the plurality of solenoids, even if one or more of the first solenoid 411, the second solenoid 412, the third solenoid 413, and the fourth solenoid 414 are damaged, the controller can obtain the inductance values from the remaining solenoids that are normally operating and derive the degree of insertion of the control rod 13 based on the inductance values.

Meanwhile, the controller 600 may be implemented by a computing device including a microprocessor, a memory, and the like, and the implementation method is obvious to those skilled in the art, so a detailed description thereof will be omitted.

The containment unit 30 may be disposed in a tank filled with a fluid. The containment unit 30 may be formed with a sealed structure. The containment unit 30 may accommodate the reactor 10 and the position indicator 20. In the event of an accident in the reactor 10, the containment unit 30 can prevent radioactive substances harmful to the human body from leaking to the outside.

Hereinafter, the operation and effects of the nuclear power plant 1 having the configuration described above will be described.

During normal operation of the reactor 10, the rod 200 can be driven up such that the magnetic body 300 is in the first withdrawn state where the magnetic body 300 is withdrawn upward from the solenoid module 400 (FIG. 2) or in the second inserted state where the entire magnetic body 300 is positioned within the solenoid module 400 (FIG. 5). In this case, a portion of the control rod 13 can be positioned to overlap the core 12 when viewed in a horizontal direction.

Further, when it is necessary to limit the output of the reactor 10 or in the event of an accident, the rod 200 can be driven down from the first withdrawn state of the magnetic body 300 such that the magnetic body 300 is in the first intermediate state where a portion of the magnetic body 300 is positioned within the solenoid module 400 (FIG. 3), or the rod 200 can be driven down from the second inserted state of the magnetic body 300 such that the magnetic body 300 is in the second intermediate state where a portion of the magnetic body 300 is withdrawn downward from the solenoid module 400 (FIG. 6). In this case, the control rod 13 can be partially inserted into the core 12, and the nuclear reaction in the core 12 can be relatively less restricted.

Furthermore, when it is necessary to further limit the output of the reactor 10, the rod 200 can be driven down further from the first intermediate state of the magnetic body 300 such that the magnetic body 300 is in the first inserted state where the entire magnetic body 300 is positioned within the solenoid module 400 (FIG. 4), or the rod 200 can be driven down further from the second intermediate state of the magnetic body 300 such that the magnetic body 300 is in the second withdrawn state where the entire magnetic body 300 is withdrawn downward from the solenoid module 400 (FIG. 7). In this case, the control rod 13 can be entirely inserted into the core 12, and the nuclear reaction in the core 12 may be relatively more limited.

In addition, the controller 600 can derive the degree of insertion of the control rod 13 into the core 12 based on changes in the inductance of the solenoid module 400. For example, when the magnetic body 300 is lowered and placed in the first intermediate state or the second intermediate state, the controller 600 can derive the first degree of insertion, which indicates the control rod 13 is partially inserted into the core 12. Further, when the magnetic body 300 is lowered further from the first intermediate state or the second intermediate state and placed in the first inserted state or the second withdrawn state, the controller 600 can derive the second degree of insertion, indicating that the control rod 13 is entirely inserted into the core 12.

In addition, the first solenoid 411, the second solenoid 412, the third solenoid 413 and the fourth solenoid 414 of the first solenoid part 410 can generate inductances of different values when the magnetic body 300 is raised or lowered and placed in either the first intermediate state or the first inserted state, or either the second intermediate state or the second withdrawn state.

Further, the first solenoid 411, the second solenoid 412, the third solenoid 413 and the fourth solenoid 414 are configured such that the number of windings per unit length for each solenoid on the bobbin 430 can be adjusted to allow them to generate inductances of the same value when the magnetic body 300 is raised or lowered and placed in either the first intermediate state or the first inserted state, or either the second intermediate state or the second withdrawn state.

Furthermore, by additionally winding the fifth solenoid 421 of the second solenoid part 420, the output signal of the inductance value of any one of the first solenoid 411, the second solenoid 412, the third solenoid 413, and the fourth solenoid 414 in the first solenoid part 410 can be adjusted.

In addition, since the first solenoid 411, the second solenoid 412, the third solenoid 413, and the fourth solenoid 414 of the first solenoid part 410 independently generate their respective inductance values, even if one or more of the first solenoid 411, the second solenoid 412, the third solenoid 413, and the fourth solenoid 414 are damaged, the remaining solenoids that are operating normally can independently generate inductance values.

Further, since the position indicator 20 independently acquires inductance values from one or more of the plurality of solenoids through the controller 600, even if one or more of the first solenoid 411, the second solenoid 412, the third solenoid 413, and the fourth solenoid 414 are damaged, the position indicator 20 can acquire inductance values from the remaining solenoids that are operating normally and can derive the degree of insertion of the control rod 13 into the core 12 based on the inductance values.

Furthermore, each of the plurality of solenoids includes a copper wire, a stainless steel cover part covering the copper wire, and a sheath covering the cover part. Accordingly, the plurality of solenoids can have durability sufficient to operate even in the high-temperature and high-pressure environment inside the reactor vessel 11.

In addition, the solenoid module 400 can be arranged within the reactor vessel 11 with its position and posture fixed. As a result, the nuclear power plant 1 can be designed in a compact form.

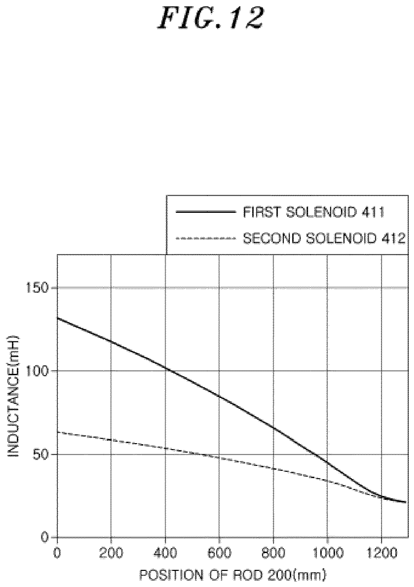

Referring to FIG. 12, for the first solenoid 411 and the second solenoid 412 of the first solenoid part 410, the graphs show the changes in the inductances generated by the first solenoid 411 and the second solenoid 412 based on the degree of insertion of the control rod 13 into the core 12, as the magnetic body 300 is raised or lowered and placed in either the first intermediate state or the first inserted state, or either the second intermediate state or the second withdrawn state. As shown, the values of the inductances generated by the first solenoid 411 and the second solenoid 412 increase as the rod 200 is driven down and the degree of insertion of the control rod 13 into the core 12 increases. Further, since the first solenoid 411 and the second solenoid 412 independently generate their respective inductance values, even if one or more of the first solenoid 411 and the second solenoid 412 are damaged, the remaining solenoids that are operating normally can generate independent inductance values. In addition, the controller 600 can obtain the inductance values from the remaining solenoids that are operating normally even if one or more of the first solenoid 411 and the second solenoid 412 are damaged, and furthermore, the controller 600 can derive the degree of insertion of the control rod 13 into the core 12 based on the inductance values.

Although the embodiments of the present disclosure have been described as specific embodiments, this is merely an example, and the present disclosure should be construed as having the broadest scope according to the technical idea disclosed herein without being limited thereto. Those skilled in the art may implement a pattern of a shape not indicated herein by combining/substituting the disclosed embodiments, but this also does not deviate from the scope of the present disclosure. In addition, those skilled in the art may easily change or modify the disclosed embodiments based on the present specification, and it is clear that such changes or modifications also fall within the scope of the present disclosure.

## Claims

1. A simultaneous wound solenoid position indicator comprising:
a rod for raising or lowering a control rod such that a degree to which the control rod is inserted into a core is decreased or increased;
a magnetic body; and
a solenoid module that receives power from an external source and generates a magnetic field toward the magnetic body, wherein an inductance generated by the solenoid module changes due to interaction with a magnetic field of the magnetic body as the control rod is driven up or down,
wherein the solenoid module includes a plurality of solenoids, and
the plurality of solenoids are wound to surround the rod while being spaced at a predetermined distance radially outward from the rod.

2. The position indicator of claim 1, wherein the solenoid module is arranged within a reactor vessel with its position and posture fixed, and
the magnetic body is withdrawn from the solenoid module or at least a portion of the magnetic body is inserted into the solenoid module as the rod is driven up or down.

3. The position indicator of claim 2, wherein the magnetic body is placed in one of the following states:
a first withdrawn state in which the rod is driven up and the magnetic body is withdrawn upward from the solenoid module;
a first intermediate state in which the rod is driven down and at least a portion of the magnetic body is positioned within the solenoid module; and
a first inserted state in which the rod is further driven down from the first intermediate state of the magnetic body and the entire magnetic body is positioned within the solenoid module.

4. The position indicator of claim 3, wherein the plurality of solenoids are configured to generate inductances of different values when the magnetic body is placed in either the first intermediate state or the first inserted state.

5. The position indicator of claim 3, wherein the plurality of solenoids are configured such that the number of windings wound around the rod is adjusted to generate an inductance of the same value when the magnetic body is placed in either the first intermediate state or the first inserted state.

6. The position indicator of claim 2, wherein the magnetic body is placed in one of the following states:
a second inserted state in which the entire magnetic body is positioned within the solenoid module;
a second intermediate state in which the rod is further driven down from the second inserted state of the magnetic body, so that at least a portion of the magnetic body is withdrawn downward from the solenoid module; and
a second withdrawn state in which the rod is further driven down from the second intermediate state of the magnetic body, so that the entire magnetic body is withdrawn downward from the solenoid module.

7. The position indicator of claim 6, wherein the plurality of solenoids are configured to generate inductances of different values when the magnetic body is placed in either the second intermediate state or the second withdrawn state.

8. The position indicator of claim 6, wherein the plurality of solenoids are configured such that the number of windings around the rod is adjusted to generate an inductance of the same value when the magnetic body is placed in either the second intermediate state or the second withdrawn state.

9. The position indicator of claim 1, wherein the solenoid module further includes one or more solenoid parts,
each of the solenoid parts includes a first solenoid, a second solenoid, a third solenoid, and a fourth solenoid, and
the first solenoid, the second solenoid, the third solenoid, and the fourth solenoid are wound in contact with each other along a direction in which the rod extends while being spaced at a predetermined distance radially outward from the rod.

10. The position indicator of claim 1, wherein the solenoid module further includes one or more solenoid parts,
the solenoid parts include a first solenoid, a second solenoid, a third solenoid, and a fourth solenoid,
the first solenoid and the second solenoid are wound in contact with each other along a direction in which the rod extends while being spaced at a predetermined distance radially outward from the rod, and
the third solenoid and the fourth solenoid are wound in contact with each other along the direction in which the rod extends on a radially outer side of the first solenoid and the second solenoid.

11. The position indicator of claim 1, wherein the solenoid module further includes:
a first solenoid part including a plurality of solenoids; and
a second solenoid part stacked on the first solenoid part to surround an outer side of the first solenoid part,
wherein the first solenoid part includes a first solenoid, a second solenoid, a third solenoid, and a fourth solenoid, and
wherein the second solenoid part includes a solenoid identical to one or more of the first solenoid, the second solenoid, the third solenoid, and the fourth solenoid.

12. The position indicator of claim 1, further comprising a controller for deriving an degree of insertion, defined as the degree to which the control rod is inserted into the core, based on changes in the inductance of the solenoid module,
wherein the controller independently obtains inductance values generated from one or more of the plurality of solenoids, and derives the degree of insertion of the control rod based on each of the obtained inductance values.

13. The position indicator of claim 1, further comprising a power supply unit that supplies power to the plurality of solenoids,
wherein the power supply unit supplies current of the same magnitude and phase to the plurality of solenoids, or supplies current of different magnitude and phase to the plurality of solenoids.

14. The position indicator of claim 1, further comprising a driving mechanism that drives up or down the rod to decrease or increase the degree to which the control rod is inserted into the core,
wherein the driving mechanism is disposed within the reactor vessel.

15. The position indicator of claim 1, wherein each of the plurality of solenoids includes:
a copper wire;
a cover part covering the copper wire; and
a sheath wrapping the cover part, and
wherein the cover part is made of stainless steel.

16. A nuclear power plant comprising:
a nuclear reactor including a core, a reactor vessel accommodating the core, and a control rod for suppressing a nuclear reaction in the core; and
a position indicator for measuring a position of the control rod when the control rod is inserted into the core,
wherein the position indicator includes:
a rod for raising or lowering the control rod such that a degree to which the control rod is inserted into the core is decreased or increased;
a magnetic body surrounding at least a portion of the rod and generating a magnetic field; and
a solenoid module that receives power from an external source and generates a magnetic field toward the magnetic body, wherein an inductance generated by the solenoid module changes due to interaction with the magnetic field of the magnetic body as the control rod is driven up or down,
wherein the solenoid module includes a plurality of solenoids, and
wherein the plurality of solenoids are wound to surround the rod while being spaced at a predetermined distance radially outward from the rod.

17. The nuclear power plant of claim 16, wherein the magnetic body is placed in one of the following states:
a first withdrawn state in which the rod is driven up and the magnetic body is withdrawn upward from the solenoid module;
a first intermediate state in which the rod is driven down and at least a portion of the magnetic body is positioned within the solenoid module; and
a first inserted state in which the rod is driven down further from the first intermediate state of the magnetic body and the entire magnetic body is positioned within the solenoid module;
wherein the control rod is positioned such that a portion thereof overlaps the core when viewed in a horizontal direction when the magnetic body is placed in the first withdrawn state,
wherein the control rod is partially inserted into the core when the magnetic body is placed in the first intermediate state, and
wherein the control rod is entirely inserted into the core when the magnetic body is placed in the first inserted state.

18. The nuclear power plant of claim 16, wherein the magnetic body is placed in one of the following states:
a second inserted state in which the entire magnetic body is positioned within the solenoid module;
a second intermediate state in which the rod is driven down further from the second inserted state of the magnetic body, so that at least a portion of the magnetic body is withdrawn downward from the solenoid module; and
a second withdrawn state in which the rod is driven down further from the second intermediate state of the magnetic body, so that the entire magnetic body is withdrawn downward from the solenoid module,
wherein the control rod is positioned such that a portion of the magnetic body overlaps the core when viewed in a horizontal direction when the magnetic body is placed in the second inserted state,
wherein the control rod is partially inserted into the core when the magnetic body is placed in the second intermediate state, and
wherein the control rod is entirely inserted into the core when the magnetic body is placed in the second withdrawn state.
